# EUROPÄISCHE PATENTSCHRIFT

(11) **EP 1 050 099 B1**
(45) Veröffentlichungstag und Bekanntmachung des Hinweises auf die Patenterteilung: **29.11.2006**
(21) Anmeldenummer: 99953618.8
(22) Anmeldetag: 27.08.1999
(51) Int. Cl.: H02K 7/08, H02K 5/173, F16C 35/067, F16C 27/08

(54) **ELEKTRISCHE ANTRIEBSEINHEIT**
ELECTRIC DRIVE UNIT
UNITE D'ENTRAINEMENT ELECTRIQUE

(30) Priorität: 29.08.1998 DE 19839407
(43) Veröffentlichungstag der Anmeldung: 08.11.2000
(73) Patentinhaber: ROBERT BOSCH GMBH, 70442 Stuttgart (DE)
(72) Erfinder: LAUK, Detlef, D-77871 Renchen (DE); FISCHER, Ernst, D-76593 Gernsbach (DE); KARCHER, Hansjoerg, D-77830 Bühlertal (DE); HERP, Juergen, D-77815 Bühl (DE); MAURER, Erik, D-77830 Bühlertal (DE); WIEGERT, Andreas, D-77876 Kappelrodeck (DE); HURST, Richard, D-77656 Offenburg (DE); WAIBEL, Anton, D-88709 Hagnau (DE)
(86) Internationale Anmeldenummer: PCT/DE1999/002687
(87) Internationale Veröffentlichungsnummer: WO 2000/013295

(56) Entgegenhaltungen:
- DE-A- 19 727 120
- FR-A- 2 748 436
- GB-A- 1 450 909
- US-A- 3 469 897
- US-A- 5 027 024

## Beschreibung

### Stand der Technik

Die Erfindung geht aus von einer elektrischen Antriebseinheit nach der Gattung des Patentanspruchs 1.

Durch die nachveröffentlichte Druckschrift DE 197 27 120 A1 gehört zum Stand der Technik eine elektrische Antriebseinheit, insbesondere für einen Scheibenwischer eines Fahrzeugs, umfassend einen Antriebsmotor mit einem in einem im wesentlichen topfförmigen Polgehäuse untergebrachten Anker, mit einem im wesentlichen topfförmigen, stirnseitig an dem Polgehäuse befestigten Getriebegehäuse zur Aufnahme von Getriebeelementen, auf welche die Drehung einer einerseits in dem Polgehäuse, andererseits in dem Getriebegehäuse gelagerten Ankerwelle des Ankers wirkt, wobei die Ankerwelle benachbart zu einem Boden des Polgehäuses in einem ersten Lager und im Bereich des Getriebegehäuses in einem zweiten Lager gelagert ist, wobei das zweite Lager als ein radiale und axiale Kräfte aufnehmendes Kugellager ausgebildet ist, das einerseits von einer axialen Anschlagfläche im Getriebegehäuse und andererseits von einem quer zur Ankerwelle in das Getriebegehäuse eingebauten und dabei nach Art eines U gestalteten Haltebügel axial gesichert ist.

Das Dokument US 5 027 024 offenbart eine ähnliche Antriebseinheit.

### Vorteile der Erfindung

Die Antriebseinheit mit den kennzeichnenden Merkmalen des Patentanspruchs 1 hat den Vorteil, daß die Federzungen den Außenring des Kugellagers in Richtung der axialen Anschlagfläche gegen das Getriebegehäuse belasten und dieserart den Außenring des Kugellagers spielfrei an die axiale Anschlagfläche anzudrücken vermögen.

Durch die in den Unteransprüchen aufgeführten Maßnahmen sind vorteilhafte Weiterbildungen und Verbesserungen der im Patentanspruch 1 angegebenen elektrischen Antriebseinheit möglich.

Die Antriebseinheit mit den kennzeichnenden Merkmalen des Patentanspruchs 2 hat den Vorteil, daß ein zur Herstellung des Haltebügels bestimmtes Werkzeug relativ einfach ausbildbar ist.

Die kennzeichnenden Merkmale des Patentanspruchs 3 ergeben den Vorteil, daß der Haltebügel mittels einfach ausgebildeter Hilfsmittel störungsfrei einbaubar ist.

Die kennzeichnenden Merkmale des Patentanspruchs 4 ergeben den Vorteil, daß weitere federnde Zungen den Außenring des Kugellagers in Richtung der axialen Anschlagfläche belasten.

### Zeichnung

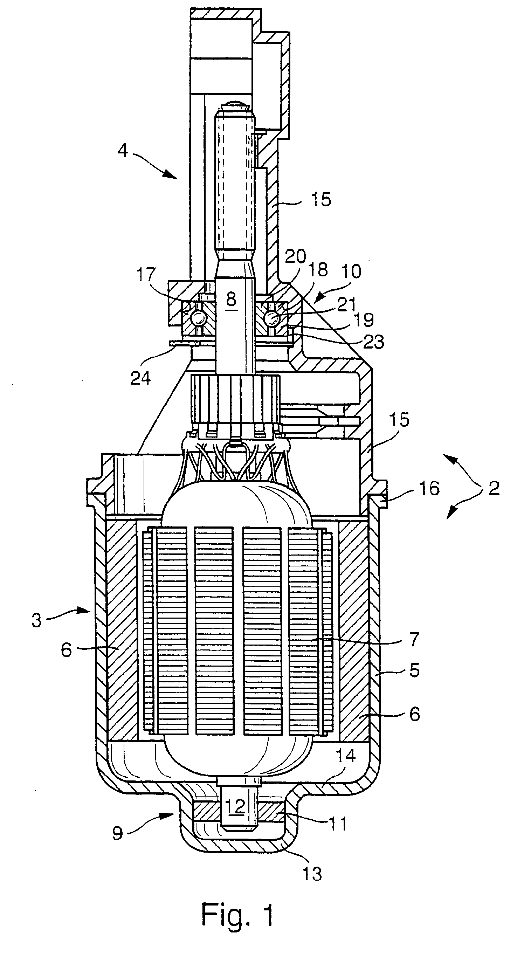

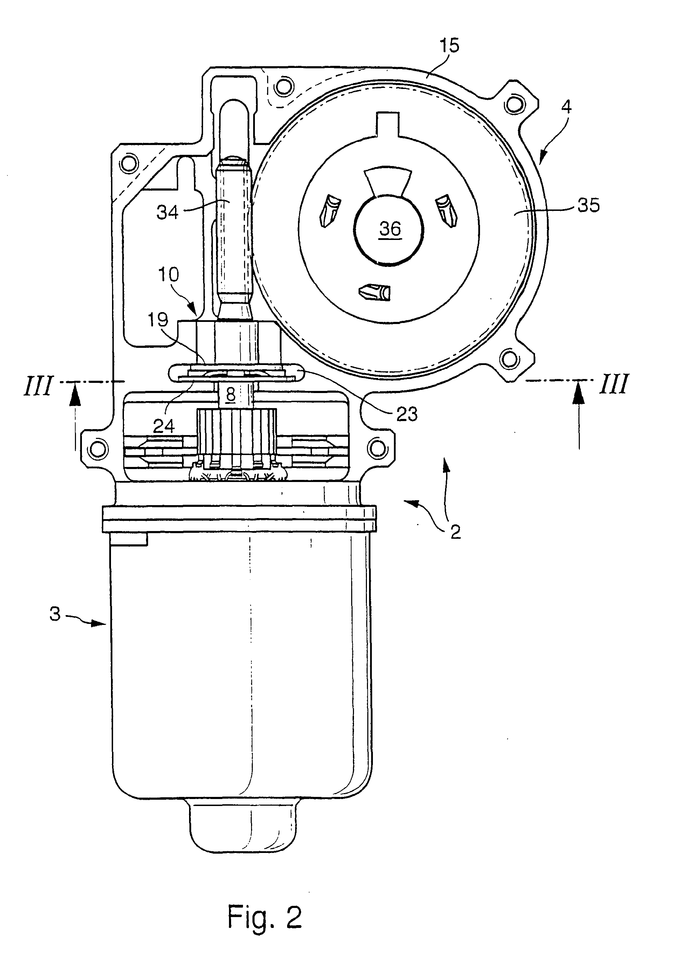

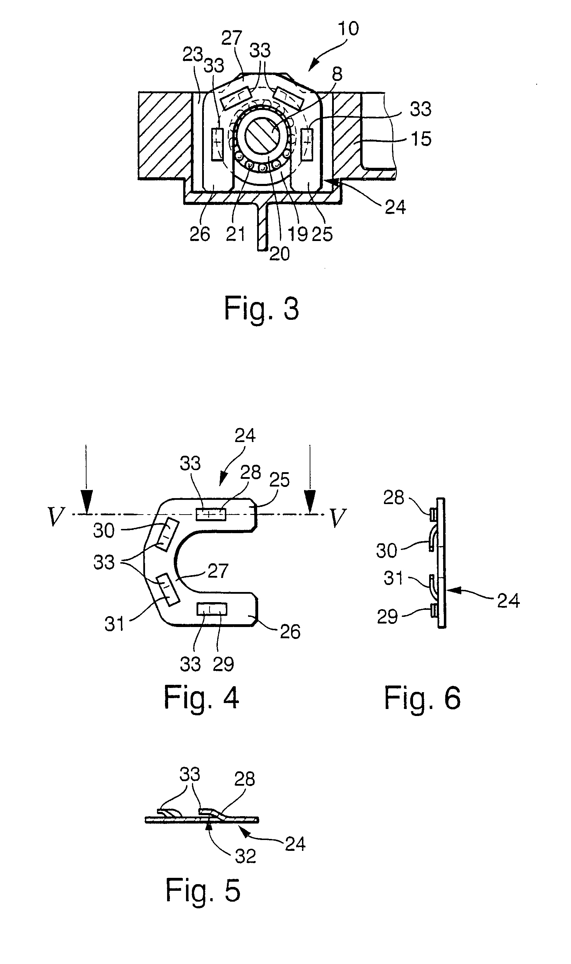

Ein Ausführungsbeispiel der erfindungsgemäßen elektrischen Antriebseinheit ist in der Zeichnung dargestellt und nachfolgend näher beschrieben. Es zeigen Figur 1 die erfindungsgemäße elektrische Antriebseinheit im Längsschnitt, Figur 2 die elektrische Antriebseinheit gemäß der Figur 1 in der Draufsicht, Figur 3 einen Querschnitt durch die elektrische Antriebseinheit der Figur 1 und die Figuren 4 bis 6 ein Bauteil der erfindungsgemäßen elektrischen Antriebseinheit gemäß der Figur 1 in verschiedenen Ansichten.

### Beschreibung des Ausführungsbeispiels

Die elektrische Antriebseinheit 2 gemäß den Figuren 1 und 2 zeigt einen elektrischen Antriebsmotor 3 und ein Getriebe 4.

Wie aus der Figur 1 ersichtlich, hat der elektrische Antriebsmotor 3 ein Polgehäuse 5 mit eingebauten Permanentmagneten 6, einen Anker 7, eine Ankerwelle 8 und ein erstes Lager 9 und ein zweites Lager 10 zur Lagerung der Ankerwelle 8.

Das erste Lager 9 ist als ein Radiallager in Form eines Gleitlagers ausgebildet und weist hierfür eine Lagerbuchse 11 auf. In der Lagerbuchse 11 drehbar ist ein Wellenende 12 der Ankerwelle 8. Dabei befindet sich die Lagerbuchse 11 in einer topfartigen Ausbuchtung 13 eines Bodens 14 des Polgehäuses 5.

Das Getriebe 4 hat ein Getriebegehäuse 15, das an einen flanschartigen Begrenzungsrand 16 des Polgehäuses 5 angesetzt ist. Das Getriebegehäuse 15 hat zur Aufnahme des zweiten Lagers 10 eine Aufnahmebohrung 17 und eine axiale Anschlagfläche 18. Die Aufnahmebohrung 17 ist offen in Richtung zum Polgehäuse 5. Das zweite Lager 10 ist ausgebildet als ein Kugellager mit einem Außenring 19, einem Innenring 20 und Kugeln 21. Der Innenring 20 ist festsitzend auf die Ankerwelle 8 aufgepreßt. Der Außenring 19 ist in die Aufnahmebohrung 17 eingeschoben. Wie am besten in der Figur 2, der Draufsicht, zu erkennen ist, hat das Getriebegehäuse 15 im Bereich einer gegen das Polgehäuse 5 gerichteten Stirnseite 22 des Außenringes 19 einen die Aufnahmebohrung 17 und die Ankerwelle 8 kreuzenden Schacht 23. Dieser Schacht 23 ist auch in der Figur 3 erkennbar und teilweise sichtbar in der Figur 1. Der Schacht 23 dient zur Aufnahme eines Haltebügel 24, das in den Figuren 4 bis 6 als einzeln herausgezeichnetes Bauteil dargestellt ist. Das Haltebügel 24 besteht aus beispielsweise Federblech, ist im wesentlichen U-förmig gestaltet mit zwei Schenkeln 25 und 26 und einem Joch 27 und weist im Beispiel gemäß den Figuren 4 bis 6 vier federnde Zungen 28, 29, 30, 31 auf. Diese federnden Zungen 28 bis 31 sind herstellbar durch Anbringen von U-förmigen Schnitten sowohl in die Schenkel 25 und 26 als auch in das Joch 27. Wie dies anhand der Figur 5, die das Haltebügel 24 in teilweise aufgeschnittenem Zustand darstellt, erkennbar ist, geht aus einer Ebene des Halteteils 24 in der Figur 5 die Zunge 28 winkelig heraus, um anschließend nach einer Biegung 32 in Form eines freien federnden Endes 33 zu enden. Auch die federnden Zungen 29, 30 und 31 sind aus der Bezugsebene des Halteteils 24 herausgebogen und weisen ebenfalls Biegungen, die nicht benummert sind, und freie Enden 33 auf. Erkennbar zeigen die freien Enden 33 der federnden Zungen 28 und 29 in die Richtungen, in denen sich das Joch 27 an die Schenkel 25 und 26 des Haltebügels 24 anschließt. Die federnden Zungen 30 und 31 sind winkelig zueinander ausgerichtet in der Weise, daß die freien federnden Enden 33 gegeneinander gerichtet sind. Dabei schließen die Längsrichtungen der federnden Zungen 30 und 31 einen Winkel von im wesentlichen 135° ein. Insoweit haben, bezogen auf eine Längsachse der Ankerwelle 8, die freien federnden Enden 33 der federnden Zungen 30 und 31 einen Winkelabstand von im wesentlichen 45°. Beispielsweise sind die federnden Zungen 28 und 29 so ausgerichtet, daß, bezogen auf die Längsachse der Ankerwelle 8 die freien federnden Enden 33 einander diametral gegenüberliegen.

Wie dies am besten in der Figur 3 zu erkennen ist, wird zum Einbauen des Haltebügels 24 dieses mit seinen Schenkeln 26 und 25 voraus im Getriebegehäuse 15 genähert und in den Schacht 23 eingeschoben, wodurch die Schenkel 25 und 26 Platz finden und das Joch 27 sich oberhalb der Ankerwelle 8 befindet. Im eingebauten Zustand des Haltebügels 24 zeigen die freien federnden Enden 33 von in den Schenkeln 25 und 26 befindlichen federnden Zungen gegen die Einbaurichtung. Dies hat den Vorteil, daß das Einschieben des Haltebügels 24 in den Schacht 23 entlang der Stirnseite 22 des Außenrings 19 des zweiten Lagers 10 problemlos möglich ist, wobei die federnden Zungen elastisch hin zur Bezugsebene des Haltebügels 24 gebogen werden und dadurch auf den Außenring 19 des zweiten Lagers 10 Kräfte ausüben, die eine Anlage des Außenringes 19 an der axialen Anschlagfläche 18 bewirken. Auch die freien Enden 33 der federnden Zungen 30 und 31 gelangen schließlich in Deckung zum Außenring 19 und verstärken dadurch die Andrückung des Außenringes 19 gegen die axiale Anschlagfläche 18. Wie es aus der Figur 3 ersichtlich ist, kommt es wesentlich darauf an, daß die freien Enden 33 gegen die Stirnseite 22 des Außenringes 19 gerichtet sind.

Wie bereits beschrieben, ist der Innenring 20 fest auf die Ankerwelle aufgepreßt, so daß zwischen der Ankerwelle 8 und dem Innenring 20 keine Relativbewegung erfolgt. Weil, wie bereits beschrieben, die axiale Anschlagfläche 18 im, Getriebegehäuse 15 vorhanden ist und weil das Haltebügel 24 in dem Schacht 23 abgestützt ist und die von dem Haltebügel 24 ausgehenden federnden Zungen 28 bis 31 gegen die Stirnseite 22 des Außenringes 19 drücken, ist das zweite Lager 10 sowohl ein Radiallager als auch ein Axiallager.

Ausgehend von einem im Innenring 20 aufgenommenen Längenabschnitt der Ankerwelle 8 ist diese Ankerwelle 8 verlängert um eine in das Getriebegehäuse 15 sich erstreckende Schneckenwelle 34. Im Eingriff mit dieser Schneckenwelle 34 befindet sich ein Schneckenrad 35, das mit einer Abtriebswelle 36 verdrehfest verbunden und mit Hilfe dieser Abtriebswelle 36 drehbar gelagert ist. Mit der Abtriebswelle 36 ist beispielsweise ein Kurbelgetriebe, das nicht dargestellt ist, eines Scheibenwischers verbunden. Dieses nicht dargestellte Kurbelgetriebe versetzt in an sich bekannter Weise wenigstens einen Scheibenwischarm in periodische Schwenkbewegungen. Aufgrund der Masse des Scheibenwischerarmes und auch eines daran befestigten Wischers und der Kinematik des Kurbeltriebes ist erkennbar, daß die Abtriebswelle 36 sowohl Drehmomente abgibt, als auch Rücktriebsmomente aus dem Kurbeltrieb aufnimmt. Dementsprechend werden auch dort, wo das Schneckenrad 35 in die Schneckenwelle 34 eingreift, bezüglich der Längsachse der Schneckenwelle 34 Kräfte mit wechselnden axialen Richtungen auftreten. Diese üblicherweise auftretenden Kräfte gelangen auf den Außenring 19 des zweiten Lagers 10 und werden einerseits von der axialen Anschlagfläche 18 und andererseits von den federnden Zungen 28 bis 31 aufgefangen. Weil der Konstrukteur die federnden Zungen ausreichend kräftig ausbildet, wird im normalen Betrieb der Außenring 19 im Kontakt mit der axialen Anschlagfläche 18 bleiben. Dies ergibt den Vorteil, daß axiale Verlagerungen der Ankerwelle 8 bzw. der Schneckenwelle 34 beschränkt sind auf dasjenige Maß, das durch unvermeidlich notwendiges Bewegungsspiel der Kugeln 21 zwischen dem Außenring 19 und dem Innenring 20 vorgegeben ist.

Das beschriebene zweite Lager 10 in Anlage an der Axialanschlagfläche 18 und auch in Anlage an den federnden Zungen 28 des Halteteils 24 ist auch verwendbar, wenn beispielsweise die Ankerwelle ein schräg verzahntes Stirnrad eines Stirnradgetriebes antreibt. Denn auch hier würden Drehmomentrichtungswechsel zu wechselnden Axialkräften entlang der Ankerwelle 8 führen.

Die Anordnung des Schachtes 23 in dem Getriebegehäuse 15 und die erfindungsgemäße Ausbildung des Haltebügels 24 ermöglichen es, die kombinierte Ankerwelle 8 und Schneckenwelle 34 mitsamt dem zweiten Lager 10 montagegünstig in das Getriebegehäuse 15 einschiebbar zu gestalten, wonach in einem einfach ausführbaren Montageschritt der Haltebügel 24 in den Schacht 23 einbaubar ist und für eine spielfreie axiale Sicherung des Außenringes 19 des zweiten Lagers 10 sorgt.

## Patentansprüche

1. Elektrische Antriebseinheit, insbesondere für einen Scheibenwischer eines Kraftfahrzeugs, umfassend einen Antriebsmotor (3) mit einem in einem Polgehäuse (5) untergebrachten Anker (7), mit einem an dem Polgehäuse (5) befestigten Getriebegehäuse (15) zur Aufnahme von Getriebeelementen, auf welche die Drehung einer einerseits in dem Polgehäuse (5), andererseits in dem Getriebegehäuse (15) gelagerten Ankerwelle (8) des Ankers (7) wirkt, wobei die Ankerwelle (8) im Polgehäuse (5) in einem ersten Lager (9) und im Bereich des Getriebegehäuses (15) in einem zweiten Lager (10) gelagert ist, wobei das zweite Lager (10) als ein radiale und axiale Kräfte aufnehmendes Kugellager mit einem Innenring (20) und einem Außenring (19) ausgebildet ist, wobei für den Außenring (19) einerseits eine axiale Anschlagfläche (18) im Getriebegehäuse (15) und andererseits ein quer zur Ankerwelle (8) in einen Schacht (23) des Getriebegehäuses eingebauter Haltebügel (24) zur Axialsicherung des Außenringes (19) angeordnet ist, **dadurch gekennzeichnet, daß** der im wesentlichen U-förmig gestaltete Haltebügel (24) aus Blech hergestellt ist und wenigstens zwei gegen eine Stirnseite (22) des Außenringes (19) des zweiten Lagers (10) gerichtete Federzungen (28, 29, 30, 31) aufweist.

2. Elektrische Antriebseinheit nach Anspruch 1, **dadurch gekennzeichnet, daß** zwei federnde Zungen (28, 29) auf zwei Schenkeln (25, 26) des Halteteils (24) verteilt angeordnet sind und daß freie federnde Enden (33) der beiden federnden Zungen (28, 29) bezüglich einer Achse der Ankerwelle (8) einander im wesentlichen diametral gegenüberliegend angeordnet sind.

3. Elektrische Antriebseinheit nach Anspruch 2, **dadurch gekennzeichnet, daß** die federnden Zungen (28, 29) im wesentlichen parallel zur Einbaurichtung des U-förmigen Haltebügels (24) ausgerichtet sind und die freien federnden Enden (33) dieser federnden Zungen (28, 29) im wesentlichen entgegen der Einbaurichtung zeigen.

4. Elektrische Antriebseinheit nach Anspruch 1 oder 3, **dadurch gekennzeichnet, daß** zwei weitere federnde Zungen (30, 31) angeordnet sind, wobei diese weiteren federnden Zungen (30, 31) im Joch (27) des Halteteils (24) spiegelbildlich mit ihren freien federnden Enden (33) gegeneinander zeigend angeordnet sind und die federnden Zungen (30, 31) zwischen sich einen Winkel von im wesentlichen 135° einschließen.

## Claims

1. Electric drive unit, in particular for a windscreen wiper of a motor vehicle, comprising a drive motor (3) having an armature (7) which is accommodated in a pole casing (5), having a gear-mechanism casing (15) which is attached to the pole casing (5) and serves to accommodate gear-mechanism elements which are acted on by the rotation of an armature shaft (8) of the armature (7) which is mounted firstly in the pole casing (5) and secondly in the gear-mechanism casing (15), with the armature shaft (8) being mounted in a first bearing (9) in the pole casing (5) and in a second bearing (10) in the region of the gear-mechanism casing (15), with the second bearing (10) being in the form of a ball bearing which absorbs radial and axial forces and has an inner ring (20) and an outer ring (19), with firstly an axial bearing surface (18) in the gear-mechanism casing (15) and secondly a retaining bracket (24) which is fitted in a shaft (23) of the gear-mechanism casing transverse to the armature shaft (8) and serves to axially secure the outer ring (19) being provided for the outer ring (19), **characterized in that** the substantially U-shaped retaining bracket (24) is produced from sheet metal and has at least two spring tongues (28, 29, 30, 31) which are directed towards an end face (22) of the outer ring (19) of the second bearing (10).

2. Electric drive unit according to Claim 1, **characterized in that** two spring tongues (28, 29) are arranged such that they are distributed over two limbs (25, 26) of the retaining part (24), and **in that** free spring ends (33) of the two spring tongues (28, 29) are arranged substantially diametrically opposite to one another with respect to an axis of the armature shaft (8).

3. Electric drive unit according to Claim 2, **characterized in that** the spring tongues (28, 29) are oriented substantially parallel to the installation direction of the U-shaped retaining bracket (24) and the free spring ends (33) of these spring tongues (28, 29) point substantially opposite to the installation direction.

4. Electric drive unit according to Claim 1 or 3, **characterized in that** two further spring tongues (30, 31) are provided, with these further spring tongues (30, 31) being arranged in the yoke (27) of the retaining part (24) with mirror-image symmetry and with their free spring ends (33) pointing towards one another, and the spring tongues (30, 31) forming an angle of substantially 135°.

## Revendications

1. Unité d'entraînement électrique, destinée notamment à un essuie-glace de véhicule automobile, comprenant un moteur d'entraînement (3) comportant un induit (7) logé dans une carcasse de stator (5), un carter de réducteur (15) qui, fixé à la carcasse de stator (5), contient des engrenages sur lesquels agit la rotation d'un arbre d'induit (8) disposé d'une part dans la carcasse de stator (5) et d'autre part dans le carter de réducteur (15), l'arbre d'induit (8) étant monté dans la carcasse de stator (5) dans un premier palier (9) et dans la zone du carter de réducteur (15) dans un second palier (10), le second palier (10) étant conçu sous la forme d'un roulement à billes recevant les forces radiales et axiales et comportant une bague intérieure (20) et une bague extérieure (19), en ayant, pour la bague extérieure (19) d'une part une surface de butée axiale (18) ménagée dans le carter de réducteur (15) et d'autre part un étrier de retenue (24) qui installé transversalement à l'arbre d'induit (8) dans une cavité (23) du carter de réducteur, sert à la fixation axiale de la bague extérieure (19),
**caractérisée en ce que**
l'étrier de retenue (24) est une tôle de forme essentiellement en U et présente au moins deux lames flexibles (28, 29, 30, 31) dirigées contre une face frontale (22) de la bague extérieure (19) du deuxième palier (10).

2. Unité d'entraînement électrique selon la revendication 1,
**caractérisée en ce que**
deux languettes flexibles (28, 29) sont réparties sur deux pattes (25, 26) de l'élément de retenue (24), et les extrémités libres flexibles (33) des deux languettes flexibles (28, 29) sont placées sensiblement diamétralement opposées l'une à l'autre par rapport à un axe de l'arbre d'induit (8).

3. Unité d'entraînement électrique selon la revendication 2,
**caractérisée en ce que**
les languettes flexibles (28, 29) sont sensiblement parallèles à une direction d'installation de l'étrier de retenue (24) en U et les extrémités libres flexibles (33) de ces languettes flexibles (28, 29) pointent sensiblement à l'opposée de la direction de montage.

4. Unité d'entraînement électrique selon la revendication 1 ou 3,
**caractérisée en ce que**
deux languettes flexibles (30, 31) supplémentaires, sont placées symétriquement dans le col (27) de l'élément de retenue (24), leurs extrémités libres flexibles (33) pointant l'une vers l'autre et les languettes flexibles (30, 31) formant entre elles un angle de sensiblement 135°.
